# EUROPEAN PATENT SPECIFICATION

(11) **EP 2 445 236 B1**
(45) Date of publication and mention of the grant of the patent: **05.12.2012**
(21) Application number: 10290568.4
(22) Date of filing: 21.10.2010
(51) Int. Cl.: H04W 4/22

(54) **Method of operating a base station of a cellular communications network**
Verfahren zum Betrieb einer Basisstation eines zellularen Kommunikationsnetzwerks
Procédé de fonctionnement d'une station de base dans un réseau de communication cellulaire

(43) Date of publication of application: 25.04.2012
(73) Proprietor: Alcatel Lucent, 75007 Paris (FR)
(72) Inventor: Sigle, Rolf, 73630 Remshalden (DE); Doetsch, Uwe, 74392 Freudental (DE)
(74) Representative: Wetzel, Emmanuelle

(56) References cited:
- EP-A2- 1 246 494
- WO-A2-2004/051976
- GB-A- 2 415 864
- US-B2- 7 058 385

## Description

### Field of the invention

The present invention relates to a method of operating a base station of a cellular communications network, wherein said base station is configured to receive signalling information from at least one terminal served by said base station and/or from a further network element of said cellular communications network.

The present invention further relates to a base station of a cellular communications network.

It is an object of the present invention to provide an improved method of operating a base station of a cellular communications network and an improved base station of a cellular communications network which enable an increased degree of flexibility regarding the signalling of time-critical information such as emergency information characterizing emergencies such as traffic accidents and the like.

US 7,058,385 B2 discloses a method for distributing an emergency call message within a mobile telecommunication network. The emergency call message generated by mobile users is automatically sent first to mobile devices in the vicinity of the mobile user. Only then is it distributed to terminals, predefined by said user, in said telecommunication network.

### Summary

According to the present invention, regarding the above-mentioned method of operating a base station of a cellular communications network, this object is achieved by a method according to claim 1.

The notification of further terminals served by said base station or even further network elements of the communications network advantageously enables to instantly propagate information on emergency situations throughout the whole communications network. Preferable, according to an embodiment, the base station notifies terminals of users that are comprised in a specific cell served by said base station or terminals of a plurality of different cells served by said base station.

According to the present invention, which enables to propagate emergency information with particularly low latencies, said step of notifying said at least one further terminal served by said base station is performed independently of a core network and/or further components of the communications network. I.e., the base station according to the present invention advantageously instantly forwards information related to said emergency indication it has received from the terminal to further terminals which might profit from receiving and evaluating said emergency indication. Particularly, according to the present invention, the base station does not rely on any further communication with a core network and/or other components of the communications network such as a radio network controller or the like prior to deciding whether to notify further terminals of the emergency situation, whereby latency may be reduced.

According to an embodiment, upon receiving an emergency indication, said base station may instantly forward information related to said emergency indication to other terminals. Thus, a specific resource allocation for said terminal sending the emergency notification need not necessarily be established. This embodiment is advantageous in such cases where a complete emergency indication may be integrated into the signalling information sent from the terminal detecting the emergency to the base station.

However, according to a further embodiment, in such cases, where a higher amount of data is related to an emergency indication, the base station may, upon receiving said emergency indication, instantly reserve and grant further uplink resources to said terminal that has sent the emergency indication, which enables the terminal to rapidly send further emergency-related information to the base station thus completing the emergency signalling process in an uplink direction.

A combination of the above listed embodiments is also possible. I.e., upon receiving an emergency indication, said base station may, in a first step, instantly forward information related to said emergency indication to other terminals. In a second step, said base station may reserve and grant further uplink resources to said terminal that has sent the emergency indication thus enabling the completion of the emergency signaling from the terminal to the base station.

According to a further embodiment, said step of notifying comprises broadcasting an emergency signalling message to a predetermined group of terminals and/or a predetermined group of further network elements such as further base stations or gateways to other networks or the like. By broadcasting an emergency signalling message, a particularly efficient propagation of emergency information is enabled.

According to a further embodiment, said step of notifying comprises notifying at least one neighbouring base station of said emergency situation, which is particularly advantageous in such cases, wherein the emergency situation affects a specific geographical region or location related to the neighbouring base stations.

According to another preferred embodiment, said step of notifying comprises forwarding information related to said emergency indication to a collector node that is configured to collect emergency indications, which may be received from one or more base stations according to the embodiments. Additionally, the collector node may be configured to forward information related to said collected emergency indications to other network elements or terminals. Additionally, the collector node may correlate a plurality of incoming emergency indications and perform statistical analysis on said incoming emergency indications to influence the information forwarded to other network elements.

According to yet another embodiment of the present invention, said communications network is compatible with the third generation partnership project, 3GPP, long-term evolution, LTE, standard, particularly LTE rel. 8, wherein said base station uses a portion of downlink control information, DCI, to notify one or more terminals of a safety message comprising information relating to said emergency situation, and wherein said base station uses at least one physical resource block, PRB, of a physical downlink shared channel, PDSCH, to transfer said safety message to said one or more terminals.

According to a further embodiment, said base station uses a radio network temporary identifier, RNTI, to define a group of terminals that are to be supplied with said safety message, which facilitates the simultaneous signalling of emergency information to a plurality of selected terminals served by the base station. By using the RNTI mechanism, an efficient control which terminal is to be provided with an emergency signalling by the base station is enabled.

A further solution to the object of the present invention is given by a base station according to claim 8. Said base station is configured to determine whether received signalling information comprises an emergency indication which indicates an existing or impending emergency situation, and to notify at least one further terminal served by said base station and/or a further network element of said emergency situation.

Further advantageous embodiments of the base station are given by dependent claims 9 to 11.

### Brief description of the figures

Further features, aspects and advantages of the present invention are given in the following detailed description with reference to the drawings in which:
- Figure 1: depicts a simplified block diagram of a communications network comprising a base station according to the embodiments,
- Figure 2: depicts a simplified flow chart of a method of operating a base station according to an embodiment, and
- Figure 3: depicts combined time-frequency-resources employed by a base station according to the embodiments for signalling emergency information to one or more terminals according to the embodiments.

### Description of the embodiments

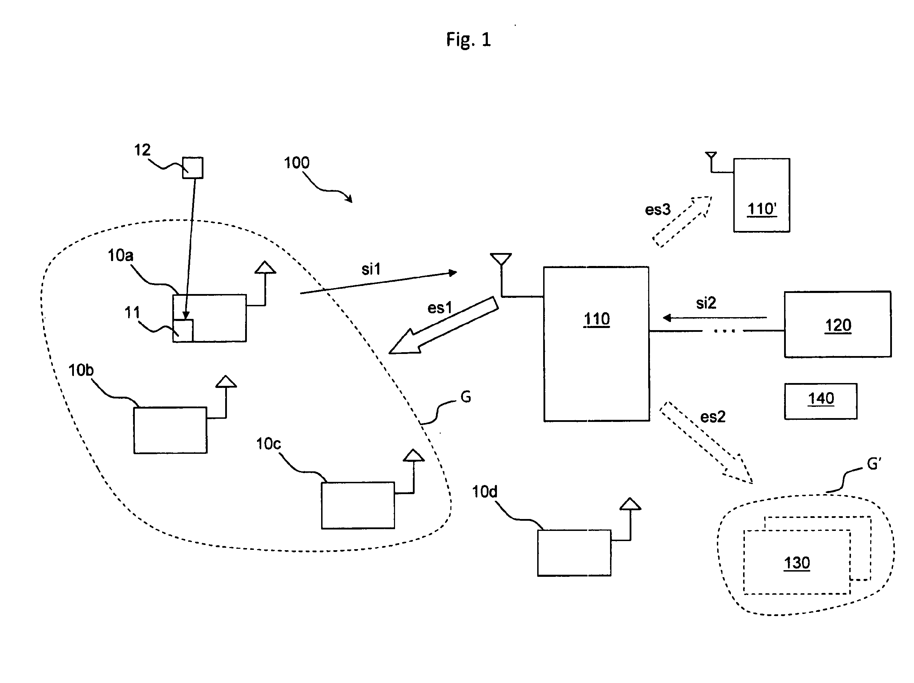

Figure 1 depicts a block diagram of a cellular communications network 100 which comprises a base station 110 and a plurality of terminals 10a, 10b, 10c, 10d that are currently served by said base station 110 in a per se known manner. According to a particularly preferred embodiment, said communications network 100 is compatible with the third generation partnership project, 3GPP, long-term evolution, LTE, standard release 8.

Apart from the base station 110 and the terminals 10a, ..., 10d, the communications network 100 also comprises at least one further base station 110' and further network elements 120, 130, which may e.g. represent radio network controllers or further network elements related to an operation of a core network the communications network 100 is based on.

The terminals 10a, ..., 10d may communicate with the base station 110 in a per se known manner to exchange data such as voice and/or further data. To enable an efficient signalling of an emergency situation one of said terminals 10a, 10b, 10c, 10d becomes aware of, the base station 110 is configured to determine whether signalling information si1 that is received from a terminal 10a comprises an emergency indication which indicates an existing or impending emergency situation as determined by the sending terminal 10a.

For instance, the terminal 10a may be configured as an LTE modem and may be comprised within a vehicle such as a car (not shown), and the terminal 10a may be connected to one or more control units of further systems 12 of the car such as an engine or a breaking system or the like. Such connection may be established via a suitable interface 11 to the car systems 12.

From these car systems 12, the terminal 10a may determine indicia that an emergency situation such as a car accident has happened or is likely to happen in future. This may e.g. be derived from excessive acceleration and/or deceleration values or variations in time of said parameters as retrieved from the car systems 12.

According to a preferred embodiment, such emergency information is signalled by the terminal 10a to the base station 110 for further propagation to other entities in order to warn a plurality of people that may also be affected by the emergency situation. For this purpose, the terminal 10a integrates an emergency indication which corresponds with the emergency situation as determined by the mobile terminal 10a into the signalling information si1 that is sent to the base station 110 in an uplink data transfer direction.

After receiving said signalling information si1 from the terminal 10a, the base station 110 determines whether said received signalling information si1 comprises an emergency indication that indicates an existing or impending emergency situation as determined by said terminal 10a.

If said determination made by the base station 110 yields that said signalling information si1 in fact comprises an emergency indication, said base station 110 notifies at least one further terminal 10b, 10c served by said base station 110 of said emergency situation. Thereby, further terminals 10b, 10c may instantly be warned of the emergency situation detected by the terminal 10a.

For instance, a group G of terminals may be defined, which are to receive emergency information whenever the base station 110 receives corresponding signalling information from a terminal or from another source of emergency information.

According to a preferred embodiment, the base station 110 may determine whether to include a new terminal detected in its radio cell into said group G depending on contracting parameters of the respective terminal or further properties of the terminal such as the terminal being integrated into a vehicle or being part of a conventional mobile phone or personal digital assistant or the like.

For example, only such terminals 10a, 10b, 10c, which are part of a vehicle system, may be associated with the emergency notification group G. A further terminal 10d, which represents a mobile phone of a pedestrian, may not be included into the emergency notification group G by the base station 110, according to warning policies of the network's operator.

Other criteria whether to integrate terminals into the notification group G may be a service plan to which users of the terminals may subscribe and the like.

According to an embodiment, upon receiving an emergency indication from the terminal 10a, said base station 110 may instantly forward information related to said emergency indication to other terminals 10b, 10c. Thus, a specific resource allocation for said terminal 10a sending the emergency notification need not necessarily be established subsequent to its initial emergency notification to the base station 110 via the message si1. This embodiment is advantageous in such cases where a complete emergency indication may be integrated into the signalling information sent from the terminal 10a detecting the emergency to the base station 110.

However, according to a further embodiment, in such cases, where a higher amount of data is related to an emergency indication, the base station 110 may, upon receiving said emergency indication from the terminal 10a, instantly reserve and grant further uplink resources to said terminal 10a that has sent the emergency indication, which enables the terminal 10a to rapidly send further emergency-related information to the base station 110 thus completing the emergency signalling process in an uplink direction. This way, substantial amounts of emergency-related data such as comprehensive time series of parameters such as vehicle speed, position details, audio and/or video data captured by a car system 12 and the like may be forwarded to the base station 110.

In contrast to conventional scheduling algorithms, after receiving an emergency indication from a terminal 10a, the base station 110 performs a specific resource scheduling which takes into account the "real-time" requirements related to an efficient emergency signalling. Said specific resource scheduling may e.g. give priority for reserving further uplink resources for the terminal 10a that has already recently indicated an emergency condition, whereas other terminals 10b, 10c, 10d currently not having signalled an emergency indication are served with a lower priority by the base station 110.

A combination of the above listed embodiments is also possible. I.e., upon receiving an emergency indication, said base station 110 may, in a first step, instantly forward information related to said emergency indication to other terminals 10b, 10c. In a second step, said base station 110 may reserve and grant further uplink resources to said terminal 10a that has sent the emergency indication thus enabling the completion of the emergency signaling from the terminal 10a to the base station 110.

A particularly preferred embodiment provides that said step of notifying at least one further terminal 10b, 10c served by said base station 110 is performed independently of a core network and/or further components of the communications network 100. Thus, once the base station 110 receives signalling information si1 which comprises an emergency indication, the base station 110 may independently decide whether to forward said emergency information to further terminals 10b, 10c or further network elements such as the network element 130 without being required to contact a core network or other network elements for the process of deciding whether to forward said emergency information. Thus, particularly low latency times may be achieved in propagating received emergency information from the base station 110 to further terminals 10b, 10c.

According to a particularly preferred embodiment, even in such cases, where further uplink resources are to be reserved for the terminal 10a that reports an emergency condition, the base station 110 can decide on its own, i.e. independently of the core network, how to schedule such further uplink resources to the terminal 10a, whereby a particularly quick resource scheduling can be achieved that improves instant propagation of emergency-related information throughout the network 100.

According to a further preferred embodiment, said step of notifying comprises broadcasting an emergency signalling message es1 to the predetermined group G of terminals 10a, 10b, 10c, whereby a particularly efficient, simultaneous notification of a plurality of terminals may be achieved, as compared to a plurality of subsequent single notifications, which may, however, also be employed according to a further embodiment.

According to a further particularly preferred embodiment, said step of notifying comprises notifying at least one neighbouring base station 110' of said emergency situation, cf. the emergency signalling message es3, whereby further terminals and/or vehicles comprising terminals that are co-located with a vehicle associated with the terminal 10a may be notified of the emergency situation.

It is also possible to provide further network elements 130 of the communications network 100 or groups G' thereof with emergency notifications es2. The further network elements 130 may e.g. represent gateways which transform received emergency messages es2 to further message formats and/or communications systems such as a plain old telephony system POTS (not depicted) and/or a world wide web interface and the like.

According to a further embodiment, the base station 110 may also be configured to forward information related to said emergency indication to a collector node 140 (Figure 1) that is configured to collect emergency indications, preferably from a plurality of different base stations 110, 110', said collector node 140 further being configured to forward information related to collected emergency indications to other network elements.

For example, the collector node 140 may perform statistical analysis and/or further analysis of incoming emergency information and may perform further processing of said emergency information to improve the quality and reliability of said emergency information. After such processing, the collector node 140 may forward related information to network elements such as the base stations 110, 110'.

According to a further embodiment, the base station 110 may receive signalling information si2 that might contain an emergency indication from a further network element 120 of the network 120. In this case, the base station may also forward said emergency indication or information derived therefrom to suitable recipients 10a, 10b, 10c, 110', 130.

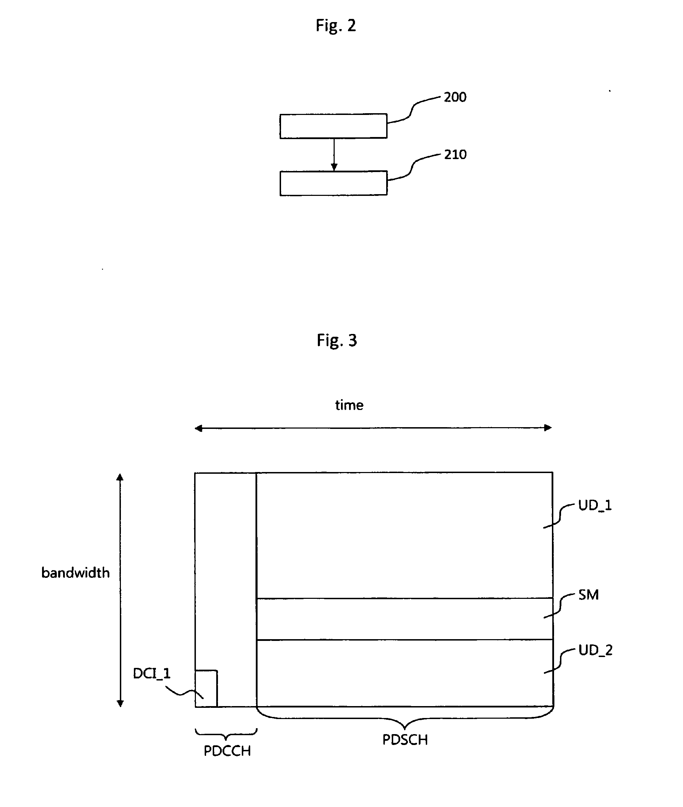

Figure 2 shows a simplified flow chart of a method according to an embodiment. In a first step 200, the base station 110 (Figure 1) determines whether received signalling information si1 comprises an emergency indication which indicates an existing or impending emergency situation.

In a second step 210, said base station 110 notifies at least one further terminal 10b, 10c served by said base station 110 and/or a further network element 130, 140 of said emergency situation.

According to a particularly preferred embodiment, the base station 110 is not required to communicate with a core network connected to said communications network 100 and/or further network elements between performing the steps 200, 210 according to Figure 2. This results in particularly low latency times for propagating emergency information from the terminal 10a via said base station 110 to further terminals 10b, 10c. Generally, the base station 110 may be configured to forward received emergency information to a single terminal 10b served by one of its own radio cells, a plurality G of terminals served by one of its own radio cells, to all terminals served by its own radio cells or to other network elements such as a neighbouring base station 110' or a further network element such as a gateway 130. It is also possible for the base station 110 to define a further group G' of further network elements 130, .. which are supposed to be supplied with the emergency information as received by the base station 110.

According to a further preferred embodiment, a per se known downlink control information, DCI, mechanism of the LTE system may be employed to notify one or more terminals 10a, 10b, 10c (Figure 1) of a safety message SM which comprises information related to said emergency situation and which is to be forwarded by the base station 110 to the terminals 10a, 10b, 10c. As such, the safety message SM corresponds with the message es1 already explained above.

Figure 3 depicts a block designating a time-bandwidth resource as known from the LTE standard. The depicted time-bandwidth resource corresponds to a sub frame comprising a length of 1 ms which is subdivided into e.g. 14 symbols as also defined by the LTE standard.

Correspondingly, one or more symbols of said subframe form a physical downlink control channel PDCCH as depicted by Figure 3, and the remaining symbols of said subframe constitute a physical downlink shared channel PDSCH.

According to an embodiment, the base station 110 (Figure 1) uses a portion DCI_1 of said downlink control information DCI comprised within the PDCCH to notify the terminals 10a, 10b, 10c of a safety message SM which comprises information related to said emergency information and which will be forwarded to the terminals 10a, 10b, 10c as described below.

As can be seen from Figure 3, the safety message SM is integrated into the physical downlink shared channel PDSCH portion of the time-bandwidth-resource block depicted by Figure 3, wherein one or more bandwidth subcarriers are reserved by the base station 110 for the safety message SM comprising the emergency information. Other subcarriers of the PDSCH may - in a per se known manner - be reserved by the base station 110 for user data UD_1, UD_2 that is to be transmitted to a terminal served by the base station 110.

According to a further advantageous embodiment, the base station 110 uses a radio network temporary identifier, RNTI, to define the group G (Figure 1) of terminals 10a, 10b, 10c that are to be supplied with said safety message SM.

For instance, whenever a terminal 10a joins a radio cell provided by said base station 110, the base station 110 decides whether to add said joining terminal 10a to the group G. If the terminal 10a is admitted to said group G, it is assigned a specific value of the RNTI that designates said terminal 10a as a recipient for the safety message SM as propagated by the base station 110 upon receiving corresponding signalling information si1 from a terminal that has detected an emergency situation.

By employing a specific RNTI for distributing the safety message SM to the group G of terminals, a particularly efficient data transmission conveying the emergency-related information to the terminals is enabled.

In other words, the group G can be considered as a special user equipment capability class which comprises only such terminals that are compatible with a base station 110 according to the embodiments regarding the forwarding and/or receiving of emergency information. Generally, any kind of signalling information si1 that is sent from a terminal 10a to the base station 110 may be employed to provide an emergency notification to the base station 110.

For example, if resources are already allocated to a terminal 10a, the terminal 10a can use a buffer status report (BSR) or a scheduling request (SR) to indicate that new data should be sent. The BSR or SR may also be employed to indicate to the base station 110 that an emergency situation does exist. A further possibility for signalling to the base station 110 is carrying out a per se known random access channel (RACH) procedure. In all of the afore mentioned cases, a special configuration can be selected for the signalling si1 to the base station 110 to indicate the emergency situation.

According to a particularly preferred embodiment, the base station 110, upon receiving signalling information si1 that comprises an emergency notification, will allocate as fast as possible an uplink grant to the terminal 10a which enables the terminal 10a to send further information related to the emergency information in an uplink direction to the base station 110.

Generally, according to an embodiment, it is possible to convey an emergency notification in an existing signalling mechanism (BSR, SR, RACH) as already mentioned above. However, to enable the terminal 10a to forward a substantial amount of data exceeding an amount of data that may be conveyed by using mere signalling mechanisms si1, the base station 110 can allocate dedicated uplink resources so that the terminal 10a can send further information related to the emergency situation to the base station 110. Particularly, this uplink grant is processed by the base station 110 independently of a core network or further network elements, whereby additional signalling processes can be saved and low latencies may be achieved.

A further possibility to notify the base station 110 of an emergency situation may be to provide a specific portion of a media access control (MAC) layer header. For instance, in the MAC header of data sent from the terminal 10a to the base station 110, an information and/or a flag can be included which is used to notify the base station 110 about the type of emergency-related information that is sent, e.g. denoting an accident, an expected accident or an unusually high acceleration or deceleration of a car comprising the terminal 10a.

According to a preferred embodiment, the base station 110, as already explained above, sends an emergency situation message es1, es2, es3 to selected recipients such as the group G of terminals or the further network elements 130 or a neighbouring base station 110'.

The method according to the embodiments may advantageously be used for operating terminals 10a, 10b, 10c, which are related to vehicles such as cars, said terminals e.g. representing LTE modems, and to propagate emergency-related information from one terminal 10a to further terminals 10b, 10c that may possibly also be involved in such emergency situation detected by the first terminal 10a.

Advantageously, the embodiments according to the present invention eliminate the necessity to provide proprietary car-to-car communication systems which might also serve to exchange emergency-related information between the cars or terminals integrated into said cars, respectively. By providing the method according to the present invention, an existing communications infrastructure of a cellular communications network such as e.g. according to the LTE standard may advantageously be used for propagating time-critical information.

By providing the method according to the present invention, the extending LTE rel. 8 standard may advantageously be extended to support time- and/or safety-critical applications which have stringent delay requirements.

The methods according the embodiments may advantageously be used by a car-based terminal 10a (Figure 1) to forward safety warnings to other, co-located terminals 10b, 10c which may be involved in the same traffic situation. Corresponding delay requirements of 50 milliseconds and less may be met by the principle of the present invention.

When using an LTE-type RNTI, this RNTI may be employed to indicate an information about a transport format and resource allocation that is used by the base station 110 to send the safety message SM (Figure 3) and/or the emergency signalling message es1 (Figure 1).

According to a preferred embodiment, the messages SM, es1, es2, es3 comprise information on a type and severeness of emergency and/or information on a position of the detected emergency situation. A vehicle's on board unit that is connected to an LTE modem 10b according to an embodiment may, after receiving corresponding information SM, es1 from the base station 110, take into account said information and may trigger further actions of a vehicle system such as notifying its driver of the received information or even automatically starting a braking maneuver of the vehicle.

The description and drawings merely illustrate the principles of the invention. It will thus be appreciated that those skilled in the art will be able to devise various arrangements that, although not explicitly described or shown herein, embody the principles of the invention and are included within its scope as defined by the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method of operating a base station (110) of a cellular communications network (100), wherein said base station (110) is configured to receive signaling information (si1, si2) from at least one terminal (10a) served by said base station (110) and/or from a further network element (120) of said cellular communications network (100), wherein said base station (110) determines (200) whether received signaling information (si1, si2) comprises an emergency indication which indicates an existing or impending emergency situation, and wherein said base station (110) notifies (210) at least one further terminal (10b, 10c) served by said base station (110) and/or a further network element (130) of said emergency situation, **characterized in that** said step of notifying (210) said at least one further terminal (10b, 10c) served by said base station (110) is performed independently of a core network and/or further components of the communications network (100) and **in that** said communications network (100) is compatible with the 3GPP LTE standard, wherein said base station (110) uses a portion (DCI 1) of downlink control information, DCI, to notify one or more terminals (10a, 10b, 10c) of a safety message (SM) comprising information related to said emergency situation, and wherein said base station (110) integrates the safety message (SM) into a physical downlink shared channel (PDSCH), wherein one or more bandwidth subcarriers are reserved by the base station (110) for the safety message (SM) comprising the emergency information.

2. Method according to preceding claim 1, wherein said step of notifying (210) comprises broadcasting an emergency signalling message (es1, es2) to a predetermined group (G) of terminals (10a, 10b, 10c) and/or a predetermined group (G') of further network elements (130).

3. Method according to one of the preceding claims, wherein said step of notifying (210) comprises notifying at least one neighbouring base station (110') of said emergency situation.

4. Method according to one of the preceding claims, wherein said step of notifying (210) comprises forwarding information related to said emergency indication to a collector node (140) that is configured to collect emergency indications and to forward information related to collected emergency indications to other network elements (110, 110', 120, 130) or terminals (10a, 10b, 10c).

5. Method according to one of the preceding claims, wherein said communications network (100) is compatible with the 3GPP LTE standard, wherein said base station (110) uses a portion (DCI_1) of downlink control information, DCI, to notify one or more terminals (10a, 10b, 10c) of a safety message (SM) comprising information related to said emergency situation, and wherein said base station (110) uses at least one physical resource block of a physical downlink shared channel, PDSCH, to transfer said safety message (SM) to said one or more terminals (10a, 10b, 10c).

6. Method according to claim 5, wherein said base station (110) uses a radio network temporary identifier, RNTI, to define a group (G) of terminals (10a, 10b, 10c) that are to be supplied with said safety message (SM).

7. Method according to one of the preceding claims, wherein, after receiving an emergency indication from said at least one terminal (10a), the base station (110) performs a specific resource scheduling which gives priority for reserving further uplink resources for said at least one terminal (10a) that has already recently indicated an emergency condition, whereas other terminals (10b, 10c, 10d) currently not having signalled an emergency indication are served with a lower priority by the base station (110).

8. Base station (110) of a cellular communications network (100), wherein said base station (110) is configured to receive signaling information (si1, si2) from at least one terminal (10a) served by said base station (110) and/or from a further network element (120) of said cellular communications network (100), wherein said base station (110) is configured to determine (200) whether received signaling information (si1, si2) comprises an emergency indication which indicates an existing or impending emergency situation, and wherein said base station (110) is configured to notify (210) at least one further terminal (10b, 10c) served by said base station (110) and/or a further network element (130) of said emergency situation, **characterized in that** said base station (110) is configured to perform said step of notifying (210) said at least one further terminal (10b, 10c) served by said base station (110) independently of a core network and/or further components of the communications network (100), wherein said communications network (100) is compatible with the 3GPP LTE standard, wherein said base station (110) is configured to use a portion (DCI 1) of downlink control information, DCI, to notify one or more terminals (10a, 10b, 10c) of a safety message (SM) comprising information related to said emergency situation, and to integrate the safety message (SM) into a physical downlink shared channel (PDSCH),
wherein one or more bandwidth subcarriers are reserved by the base station (110) for the safety message (SM) comprising the emergency information.

9. Base station according to claim 8, wherein said base station (110) is configured to broadcast an emergency signalling message (es1, es2) to a predetermined group (G) of terminals (10a, 10b, 10c) and/or a predetermined group (G') of further network elements (130).

10. Base station according to one of the claims 8 to 9, wherein said communications network (100) is compatible with the 3GPP LTE standard, wherein said base station (110) is configured to use a portion (DCI_1) of downlink control information, DCI, to notify one or more terminals (10a, 10b, 10c) of a safety message (SM) comprising information related to said emergency situation, and wherein said base station (110) is configured to use at least one physical resource block of a physical downlink shared channel, PDSCH, to transfer said safety message (SM) to said one or more terminals (10a, 10b, 10c).

11. Base station (110) according to one of the claims 8 to 10, wherein said base station (110) is configured to, after receiving an emergency indication from said at least one terminal (10a), perform a specific resource scheduling which gives priority for reserving further uplink resources for said at least one terminal (10a) that has already recently indicated an emergency condition, whereas other terminals (10b, 10c, 10d) currently not having signalled an emergency indication are served with a lower priority by the base station (110).

## Patentansprüche

1. Verfahren zum Betrieb einer Basisstation (110) eines zellularen Kommunikationsnetzwerks (100), wobei die besagte Basisstation (110) für den Empfang von Signalisierungeinformationen (si1, si2) von mindestens einem von der besagten Basisstation (110) bedienten Endgerät (10a) und/oder von einem weiteren Netzwerkelement (120) des besagten zellularen Kommunikationsnetzwerk (100) konfiguriert ist, wobei die besagte Basisstation (110) ermittelt (200), ob die empfangenen Signalisierungsinformationen (si1, si2) eine Notfallmeldung enthalten, welche eine bestehende oder bevorstehende Notfallsituation anzeigt, und wobei die besagte Basisstation (110) mindestens ein von der besagten Basisstation (110) bedientes weiteres Endgerät (10b, 10c) und/oder ein weiteres Netzwerkelement (130) von der besagten Notfallsituation benachrichtigt (210), **dadurch gekennzeichnet, dass** der besagte Schritt des Benachrichtigens (210) des besagten mindestens einen von der besagten Basisstation (110) bedienten weiteren Endgeräts (10b, 10c) unabhängig von einem Kernnetzwerk und/oder weiteren Komponenten des Kommunikationsnetzwerks (100) durchgeführt wird, und dass das besagte Kommunikationsnetzwerk (100) mit dem 3GPP LTE-Standard kompatibel ist, wobei die besagte Basisstation (110) einen Teil (DCI 1) der Downlink-Steuerinformationen, DCI, verwendet, um ein oder mehrere Endgeräte (10a, 10b, 10c) von einer Sicherheitsmeidung (SM) mit Informationen In Bezug auf die besagte Notfallsituation zu benachrichtigen, und wobei die besagte Basisstation (110) die Sicherheitsmeldung (SM) in einen gemeinsamen physikalischen Downlink-Kanal (PDSCH) integriert, wobei ein oder mehrere Teilträger der Bandbreite von der Basisstation (110) für die Sicherheitsmeidung (SM) mit der Notfallinformationen reserviert werden.

2. Verfahren nach dem vorstehenden Anspruch 1, wobei der besagte Schritt des Benachrichtigens (210) das Senden einer Notfallsignalisierungsnachricht (es1, es2) an eine vorbestimmte Gruppe (G) von Endgeräten (10a, 10b, 10c) und/oder eine vorbestimmte Gruppe (G') von weiteren Netzwerkelementen (130) umfasst.

3. Verfahren nach einem der vorstehenden Ansprüche, wobei der besagte Schritt des Benachrichtigens (210) das Benachrichtigen mindestens einer benachbarten Basisstation (110') von der besagten Notfallsituation umfasst.

4. Verfahren nach einem der vorstehenden Ansprüche, wobei der besagte Schritt des Benachrichtigens (210) das Weiterleiten von Informationen in Bezug auf die besagte Notfallmeldung an einen Kollektorknoten (140), welcher für das Sammein von Notfallmeldungen konfiguriert ist, und das Weiterleiten von Informationen In Bezug auf gesammelte Notfallmeldungen an andere Netzwerkelemente (110, 110', 120, 130) oder Endgeräte (10a, 10b, 10c) umfasst.

5. Verfahren nach einem der vorstehenden Ansprüche, wobei das besagte Kommunikationsnetzwerk (100) mit dem 3GPP LTE-Standard kompatibel ist, wobei die besagte Basisstation (110) einen Teil (DCI_1) der Downlink-Steuerinformationen, DCI, verwendet, um ein oder mehrere Endgeräte (10a, 10b, 10c) von einer Sicherheitsmeldung (SM) mit Informationen in Bezug auf die besagte Notfallsituation zu benachrichtigen, und wobei die besagte Basisstation (110) mindestens einen physikalischen Ressourcenblock eines gemeinsamen physikalischen Downlink-Kanals, PDSCH, verwendet, um die besagte Sicherheitsmeldung (SM) an das besagte eine oder die besagten mehreren Endgeräte (10a, 10b, 10c) zu übertragen.

6. Verfahren nach Anspruch 5, wobei die besagte Basisstation (110) eine temporäre Funknetzwerkkennung, RNTI, verwendet, um eine Gruppe (G) von Endgeräten (10a, 10b, 10c), an welche die besagte Sicherheitsmeldung (SM) zu senden ist, zu definieren.

7. Verfahren nach einem der vorstehenden Ansprüche, wobei die Basisstation (110) nach Empfang einer Notfallmeldung von dem besagten mindestens einen Endgerät (10a) eine spezifische Ressourcenplanung durchführt, die für die Reservierung von weiteren Uplink-Ressourcen für das besagte mindestens eine Endgerät (10a), welches unlängst bereits einen Notfallzustand angezeigt hat, die Priorität erteilt, während andere Endgeräte (10b, 10c, 10d) die noch keine Notfallmeldung signalisiert haben, mit einer niedrigeren Priorität von der Basisstation (110) bedient werden (110).

8. Basisstation (110) eines zellularen Kommunikationsnetzwerks (100), wobei die besagte Basisstation (110) für den Empfang von Signalisierungsinformationen (si1, si2) von mindestens einem von der besagten Basisstation (110) bedienten Endgerät (10a) und/oder von einem weiteren Netzwerkelement (120) des besagten zellularen Kommunikationsnetzwerk (100) konfiguriert ist, wobei die besagte Basisstation (110) dafür konfiguriert ist, zu ermitteln (200), ob die empfangenen Signalisierungsinformationen (si1, si2) eine Notfallmeldung enthalten, welche eine bestehende oder bevorstehende Notfallsituation anzeigt, und wobei die besagte Basisstation (110) dafür konfiguriert ist, mindestens ein von der besagten Basisstation (110) bedientes weiteres Endgerät (10b, 10c) und/oder ein weiteres Notzwerkelement (130) von der besagten Notfallsituation zu benachrichtigen (210), **dadurch gekennzeichnet, dass** die besagte Basisstation (110) dafür konfiguriert ist, den besagten Schritt des Benachrichtigens (210) des besagten mindestens einen von der besagten Basisstation (110) bedienten weiteren Endgeräts (10b, 10c) unabhängig von einem Kernnetzwerk und/oder weiteren Komponenten des Kommunikationsnetzwerks (100) durchzuführen, wobei das besagte Kommunikationsnetzwerk (100) mit dem 3GPP LTE-Standard kompatibel ist, wobei die besagte Basisstation (110) dafür konfiguriert ist, einen Teil (DCI 1) der Downlink-Steuerinformationen, DCI, zu verwenden, um ein oder mehrere Endgeräte (10a, 10b, 10c) von einer Sicherheitsmeldung (SM) mit Informationen In Bezug auf die besagte Notfallsituation zu benachrichtigen und die Sicherheitsmeldung (SM) In einen gemeinsamen physikalischen Downlink-Kanal (PDSCH) zu integrieren, wobei ein oder mehrere Teilträger der Bandbreite von der Basisstation (110) für die Sicherheitsmeldung (SM) mit der Notfallinformationen reserviert werden.

9. Basisstation nach Anspruch 8, wobei die besagte Basisstation (110) dafür konfiguriert ist, eine Notfallsignalisierungsnachricht (es1, es2) an eine vorbestimmte Gruppe (G) von Endgeräten (10a, 10b, 10c) und/oder eine vorbestimmte Gruppe (G') von weiteren Netzwerkelementen (130) zu senden.

10. Basisstation nach einem der Ansprüche 8 bis 9, wobei das besagte Kommunikationsnetzwerk (100) mit dem 3GPP LTE-Standard kompatibel ist, wobei die besagte Basisstation (110) dafür konfiguriert ist, einen Teil (DCI_1) der Downllnk-Steuerinformationen, DCI, zu verwenden, um ein oder mehrere Endgeräte (10a, 10b, 10c) von einer Sicherheitsmeldung (SM) mit Informationen In Bezug auf die besagte Notfallsituation zu benachrichtigen, und wobei die besagte Basisstation (110) dafür konfiguriert ist, mindestens einen physikalischen Ressourcenblock eines gemeinsamen physikalischen Downlink-Kanals, PDSCH, zu verwenden, um die besagte Sicherheitsmeldung (SM) an das besagte eine oder die besagten mehreren Endgeräte (10a, 10b, 10c) zu übertragen.

11. Basisstation (110) nach einem der Ansprüche 8 bis 10, wobei die besagte Basisstation (110) dafür konfiguriert ist, nach Empfang einer Notfallmeldung von dem besagten mindestens einen Endgerät (10a) eine spezifische Ressourcenplanung durchzuführen, welche der Reservierung von weiteren Uplink-Ressourcen für das besagte mindestens eine Endgerät (10a), welches unlängst bereits einen Notfallzustand angezeigt hat, die Priorität erteilt, während andere Endgeräte (10b, 10c, 10d), die noch keine Notfallmeldung signalisiert haben, mit einer niedrigeren Priorität von der Basisstation (110) bedient werden.

## Revendications

1. Procédé de fonctionnement d'une station de base (110) d'un réseau de communication cellulaire (100), dans lequel ladite station de base (110) est configurée pour recevoir des informations de signalisation (si1, si2) à partir d'au moins un terminal (10a) desservi par ladite station de base (110) et/ou à partir d'un autre élément de réseau (120) dudit réseau de communication cellulaire (100), dans lequel ladite station de base (110) détermine (200) si les informations de signalisation (si1, si2) reçues comprennent une indication d'urgence qui indique une situation d'urgence existante ou imminente, et dans lequel ladite station de base (110) signale (210) ladite situation d'urgence à au moins un autre terminal (10b, 10c) desservi par ladite station de base (110) et/ou à un autre élément de réseau (130), **caractérisé en ce que** ladite étape de signalisation (210) audit au moins un autre terminal (10b, 10c) desservi par ladite station de base (110) est exécutée indépendamment d'un coeur de réseau et/ou d'autres composants du réseau de communication (100) et **en ce que** ledit réseau de communication (100) est compatible avec la norme 3GPP LTE, dans lequel ladite station de base (110) utilise une partie (DCI_1) d'informations de commande de liaison descendante, DCI, pour signaler à un ou plusieurs terminaux (10a, 10b, 10c) un message de sécurité (SM) comprenant des informations relatives à ladite situation d'urgence, et dans lequel ladite station de base (110) intègre le message de sécurité (SM) dans un canal partagé de liaison descendante physique (PDSCH), dans lequel une ou plusieurs sous-porteuses de bande passante sont réservées par la station de base (110) pour le message de sécurité (SM) comprenant les informations d'urgence.

2. Procédé selon la revendication 1 précédente dans lequel ladite étape de signalisation (210) comprend la diffusion d'un message de signalisation d'urgence (es1, es2) à un groupe prédéterminé (G) de terminaux (10a, 10b, 10c) et/ou à un groupe prédéterminé (G') d'autres éléments de réseau (130).

3. Procédé selon l'une des revendications précédentes, dans lequel ladite étape de signalisation (210) comprend la signalisation de ladite situation d'urgence à au moins une station de base voisine (110').

4. Procédé selon l'une des revendications précédentes, dans lequel ladite étape de signalisation (210) comprend le transfert d'informations relatives à ladite indication d'urgence vers un noeud collecteur (140) qui est configuré pour collecter des indications d'urgence et pour transférer des informations relatives aux indications d'urgence collectées vers d'autres éléments de réseau (110, 110', 120, 130) ou terminaux (10a, 10b, 10c).

5. Procédé selon l'une des revendications précédentes, dans lequel ledit réseau de communication (100) est compatible avec la norme 3GPP LTE, dans lequel ladite station de base (110) utilise une partie (DCI_1) d'informations de commande de liaison descendante, DCI, pour signaler à un ou plusieurs terminaux (10a, 10b, 10c) un message de sécurité (SM) comprenant des informations relatives à ladite situation d'urgence, et dans lequel ladite station de base (110) utilise au moins un bloc de ressources physiques d'un canal partagé de liaison descendante physique, PDSCH, pour transférer ledit message de sécurité (SM) vers ledit ou lesdits terminaux (10a, 10b, 10c).

6. Procédé selon la revendication 5, dans lequel ladite station de base (110) utilise un identifiant temporaire de réseau radio, RNTI, pour définir un groupe (G) de terminaux (10a, 10b, 10c) qui doivent recevoir ledit message de sécurité (SM).

7. Procédé selon l'une des revendications précédentes, dans lequel après la réception d'une indication d'urgence à partir dudit au moins un terminal (10a), la station de base (110) réalise une planification de ressources spécifiques qui donne la priorité pour réserver d'autres ressources de liaison montante pour ledit au moins un terminal (10a) qui a déjà indiqué récemment une condition d'urgence, alors que d'autres terminaux (10b, 10c, 10d) n'ayant pas actuellement signalé une indication d'urgence sont desservis avec une priorité inférieure par la station de base (110).

8. Station de base (110) d'un réseau de communication cellulaire (100), dans lequel ladite station de base (110) est configurée pour recevoir des informations de signalisation (si1, si2) à partir d'au moins un terminal (10a) desservi par ladite station de base (110) et/ou à partir d'un autre élément de réseau (120) dudit réseau de communication cellulaire (100), dans laquelle ladite station de base (110) est configurée pour déterminer (200) si les informations de signalisation (si1, si2) reçues comprennent une indication d'urgence qui indique une situation d'urgence existante ou imminente, et dans laquelle ladite station de base (110) est configurée pour signaler (210) ladite situation d'urgence à au moins un autre terminal (10b, 10c) desservi par ladite station de base (110) et/ou à un autre élément de réseau (130), **caractérisée en ce que** ladite station de base (110) est configurée pour exécuter ladite étape de signalisation (210) audit au moins un autre terminal (10b, 10c) desservi par ladite station de base (110) indépendamment d'un coeur de réseau et/ou d'autres composants du réseau de communication (100), dans laquelle ledit réseau de communication (100) est compatible avec la norme 3GPP LTE, dans laquelle ladite station de base (110) est configurée pour utiliser une partie (DCI_1) d'informations de commande de liaison descendante, DCI, pour signaler à un ou plusieurs terminaux (10a, 10b, 10c) un message de sécurité (SM) comprenant des informations relatives à ladite situation d'urgence, et pour intégrer le message de sécurité (SM) dans un canal partagé de liaison descendante physique (PDSCH), dans laquelle une ou plusieurs sous-porteuses de bande passante sont réservées par la station de base (110) pour le message de sécurité (SM) comprenant les informations d'urgence.

9. Station de base selon la revendication 8, dans laquelle ladite station de base (110) est configurée pour diffuser un message de signalisation d'urgence (es1, es2) à un groupe prédéterminé (G) de terminaux (10a, 10b, 10c) et/ou à un groupe prédéterminé (G') d'autres éléments de réseau (130).

10. Station de base selon l'une des revendications 8 à 9, dans laquelle ledit réseau de communication (100) est compatible avec la norme 3GPP LTE, dans laquelle ladite station de base (110) est configurée pour utiliser une partie (DCI_1) d'informations de commande de liaison descendante, DCI, pour signaler à un ou plusieurs terminaux (10a, 10b, 10c) un message de sécurité (SM) comprenant des informations relatives à ladite situation d'urgence, et dans laquelle ladite station de base (110) est configurée pour utiliser au moins un bloc de ressources physiques d'un canal partagé de liaison descendante physique, PDSCH, pour transférer ledit message de sécurité (SM) vers ledit ou lesdits terminaux (10a, 10b, 10c).

11. Station de base (110) selon l'une des revendications 8 à 10, dans laquelle ladite station de base (110) est configurée, après la réception d'une indication d'urgence à partir dudit au moins un terminal (10a), pour réaliser une planification de ressources spécifiques qui donne la priorité pour réserver d'autres ressources de liaison montante pour ledit au moins un terminal (10a) qui a déjà indiqué récemment une condition d'urgence, alors que d'autres terminaux (10b, 10c, 10d) n'ayant pas actuellement signalé une indication d'urgence sont desservis avec une priorité inférieure par la station de base (110).
